# EUROPEAN PATENT SPECIFICATION

(11) **EP 0 312 300 B1**
(45) Date of publication and mention of the grant of the patent: **19.05.1993**
(21) Application number: 88309496.3
(22) Date of filing: 11.10.1988
(51) Int. Cl.: B60C 9/20

(54) **Pneumatic radial tyre**
Gürtelreifen
Bandage pneumatique radial

(30) Priority: 13.10.1987 JP 259246/87
(43) Date of publication of application: 19.04.1989
(73) Proprietor: SUMITOMO RUBBER INDUSTRIES LIMITED, Chuo-ku Kobe-shi Hyogo 651 (JP)
(72) Inventor: Oku, Masahiro, Osaka Shi Osaka (JP); Iwamura, Kazumitsu, Kobe-shi Hyogo (JP)
(74) Representative: Finsterwald, Manfred, Dipl.-Ing., Dipl.-Wirtsch.-Ing.

(56) References cited:
- DE-B- 1 024 824
- FR-A- 1 584 691
- FR-A- 2 037 520
- FR-A- 2 379 391
- US-A- 2 895 525
- US-A- 2 958 359

## Description

The present invention relates to a pneumatic radial tyre, in which both steering stability and ride comfort are improved which can be used for passenger cars.

Pneumatic radial tyres are widely used for their steering stability and low fuel consumption characteristics. However, the recent remarkable improvements of vehicle performance require further improvement in steering stability, and thus, radial tyres are tending to have lower aspect ratios. At the same time, however, they are require to have ride comfort which is also improved.

In general, the vertical rigidity of the tyre affects the ride comfort and ride comfort is worsened by any increase in vertical rigidity. On the other hand, steering stability is mainly affected by the lateral rigidity of the whole tyre, and increase in lateral rigidity increase steering stability. However, when the lateral rigidity of a tyre is increased to improve steering stability, the vertical rigidity is also increased and consequently the ride comfort is worsened. Thus improvements in ride comfort and stable driving are generally antinomic requirements.

In order to solve a part of such problem it has been proposed to change slightly the angles of the carcass cords in Japanese Patent Publication No. 53-8402. However, such a carcass change is inadequate to cover the required characteristics.

As described above, improvements in ride comfort and steering stability are generally antinomic, and further, there is such a precise correlation between the vertical rigidity and the transverse rigidity that when one is increased, the other is also invariably increased.

The object of the present invention is therefore to provide a pneumatic radial tyre, in which both steering stability and ride comfort are improved in a balanced way and which can be used most suitably for passenger cars.

The inventors studied the relation between the angles of the breaker cords and the bending rigidity of the breaker in both the widthwise or lateral direction and the radial direction through the breaker and of the contributions of the tread crown portion and the tread shoulder portions to the steering stability and ride comfort. It was discovered that, the tyre as a whole can be improved in both ride comfort and steering stability.

Generally, when the bending rigidity of the breaker in the modular thicknesswise direction thereof (hereinafter referred as "perpendicular bending rigidity") is decreased, the vertical rigidity of the tyre is also decreased, and accordingly the ride comfort is improved. On the other hand, when the bending rigidity of the breaker in the widthwise direction thereof (hereinafter referred as "lateral bending rigidity") is increased, the lateral rigidity of the tread is also increased, which improves steering stability.

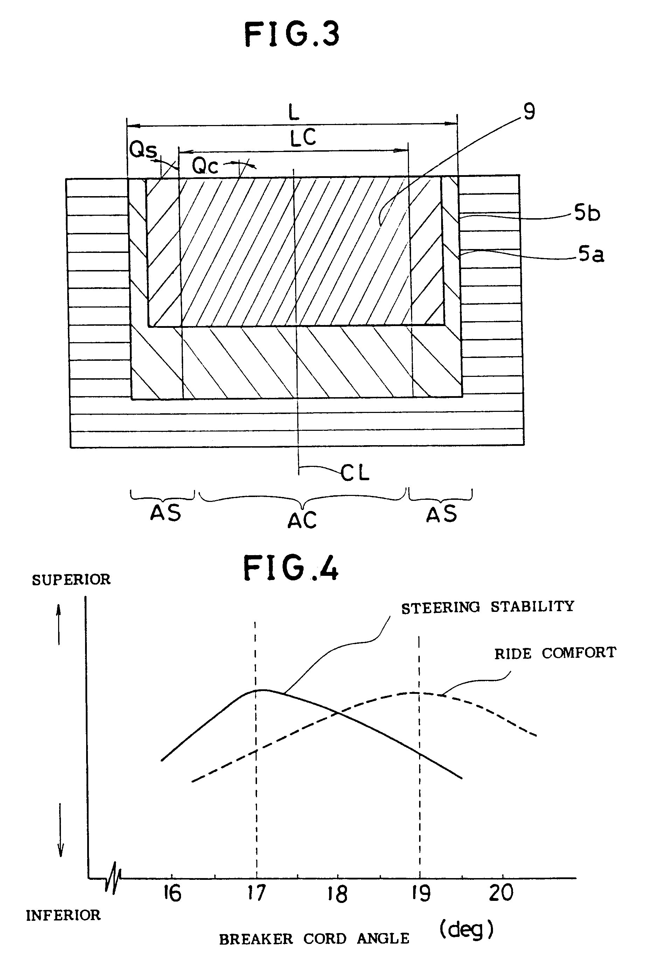

In a breaker having at least two plies of cords arranged so that the cords of each ply cross the cords of the next ply, when the angles of the breaker cords to the equatorial plane of the tyre are changed within a certain range, the perpendicular bending rigidity reaches a minimum value at a certain breaker cord angle, while the lateral bending rigidity takes a maximum value. Fig.4 shows the relationship between breaker cord angle and evaluated steering stability and ride comfort for a radial tyre for passenger cars having an aspect ratio of 82% and provided with a breaker of two plies in which the cords of the inner ply are arranged at the same angle as that of the outer ply, but in the opposite direction.

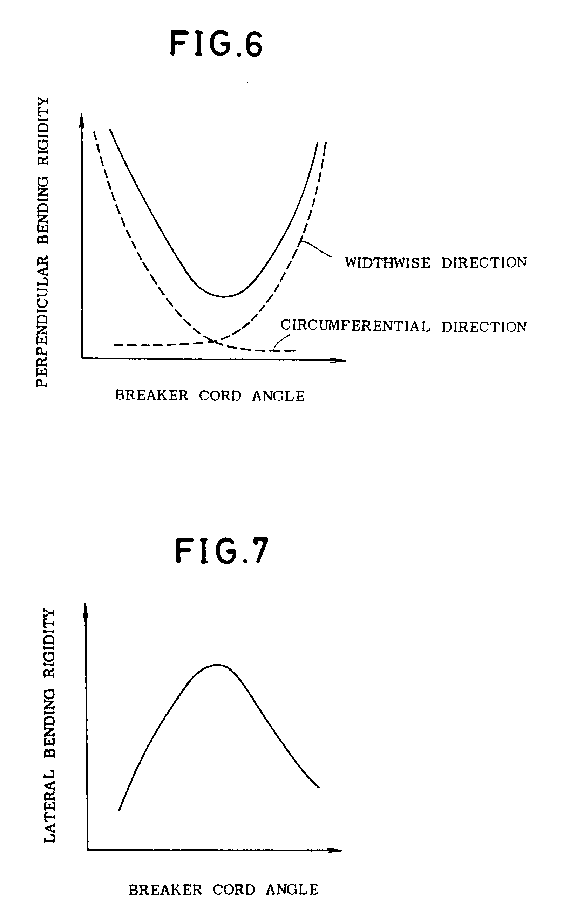

It can be understood from Fig.4 that the steering stability and the ride comfort are both improved by increasing the breaker cord angle in a range under 17 degrees. This is because, as shown typically in Fig.8 and 7, by increasing the breaker cord angle in such a range, the perpendicular bending rigidity is decreased, but the lateral bending rigidity is increased. As a result, both ride comfort and steering stability can be improved but only at such low angles.

However, Fig.4 obviously also shows that both characteristics become worse if the angle is increased beyond 19 degrees, and also shows that the evaluated steering stability and ride comfort reach a maximum when the breaker angle is at about 17 degrees and about 19 degrees respectively.

Further, it was found that the breaker cord angles at the maximum values of both evaluated properties varies with tyre size, and also have a tendency to be increased by decreasing the aspect ratio of the tyre.

Between the above mentioned angles at the maximum values, both characteristics have reciprocal tendencies. This is because of the fact that the angles at which the value of the lateral bending rigidity becomes a minimum or a maximum values differ from those for the perpendicular bending rigidity.

Here, it is notable again that the ride comfort can be improved by decreasing the vertical rigidity of the tyre, and the steering stability can be improved by increasing the lateral rigidity of the tyre.

The inventors upon further consideration of the tread found the following surprising facts. If the rigidity of the tread crown portion is increased, the directional stability is improved, which contributes to an improvement in steering stability. Contrarily if the rigidity of the tread crown portion is decreased, the ride comfort is improved. On the other hand, if the perpendicular bending rigidity in the tread shoulder portion where the ground contacting pressure is high, is decreased, ride comfort is improved. If the lateral bending rigidity in the tread shoulder portion is increased, the cornering power is also increased so that the steer stability in cornering is enhanced.

That is, it was found that the ride comfort and the steering stability could be improved in a balanced manner by adjusting the rigidity of the tread crown portion and that of the tread shoulder portions in the correct manner. Therefore, the inventors considered these rigidities of the breaker and their effect on both characteristics as described above, and discovered that by changing the breaker cord angles in the crown portion from those in the shoulder portions both characteristics can be desirably improved in a well balanced manner.

US-A-2 958 359 discloses a pneumatic radial tyre comprising a carcass of at least one ply of radially arranged cords turned up around bead cores from the inside to the outside thereof, and a breaker disposed radially outside said carcass and comprising at least two adjacent plies inclined with respect to the equatorial plane of the tyre so that the cords of one ply are inclined oppositely to the cords of the other ply, the cords of each of said breaker plies continously arranged so that the cord angle in a crown portion to the equatorial plane differs from the cord angle in each shoulder portion of the breaker to the equatorial plane, said crown portion centred about the tyre equator, said shoulder portions located one on each side of said crown portion, wherein the crown portion has a width of 0,33 to 0,6 times the maximum width of the breaker, the difference between the cord angle in the crown portion and the cord angle in the shoulder portions is about 15 to 20 degrees, and these cord angles are in the range of 0 to 50 degrees.

According to the present invention, a pneumatic radial tyre comprises a carcass of at least one ply of radially arranged cords turned up around bead cores from the inside to the outside thereof, and a breaker disposed radially outside said carcass and comprising at least two adjacent plies inclined with respect to the equatorial plane of the tyre so that the cords of one ply are inclined oppositely to the cords of the other ply, the cords of each of said breaker plies arranged so that the cord angle QC in a crown portion to the equatorial plane differs from the cord angle QS in each shoulder portion of the breaker to the equatorial plane, said crown portion centred about the tyre equator, said shoulder portions located one on each side of said crown portion, characterised in that the crown portion has a width of 0.4 to 0.8 times the maximum width of the breaker, the cord angle QS in the shoulder portions is larger than the cord angle QC in the crown portion, the difference between the cord angle QC in the crown portion and the cord angle QS in the shoulder portions is not less than 2 degrees, and the cord angles QC and QS are in the range of 15 to 35 degrees.

Some embodiments of the present invention will now be described by way of example only referring to the drawings, in which:
Figure 1 is a cross sectional view showing an embodiment of the present invention;
Fig.2 is a developed plan view showing the breaker and the carcass of the tyre in Fig.1.
Fig.3 is a developed plan view showing another embodiment of the present invention
Fig.4 is a graph showing the relationship between breaker cord angle and steering stability and the relationship between the breaker cord angle and ride comfort.
Fig.5 (a) and (b) are cross sectional views each showing a method of forming breaker cords
Fig.6 is a graph showing the relationship between breaker cord angle and the perpendicular bending rigidity of the breaker and
Fig.7 is a graph showing the relationship between breaker cord angle and the lateral bending rigidity of the breaker.

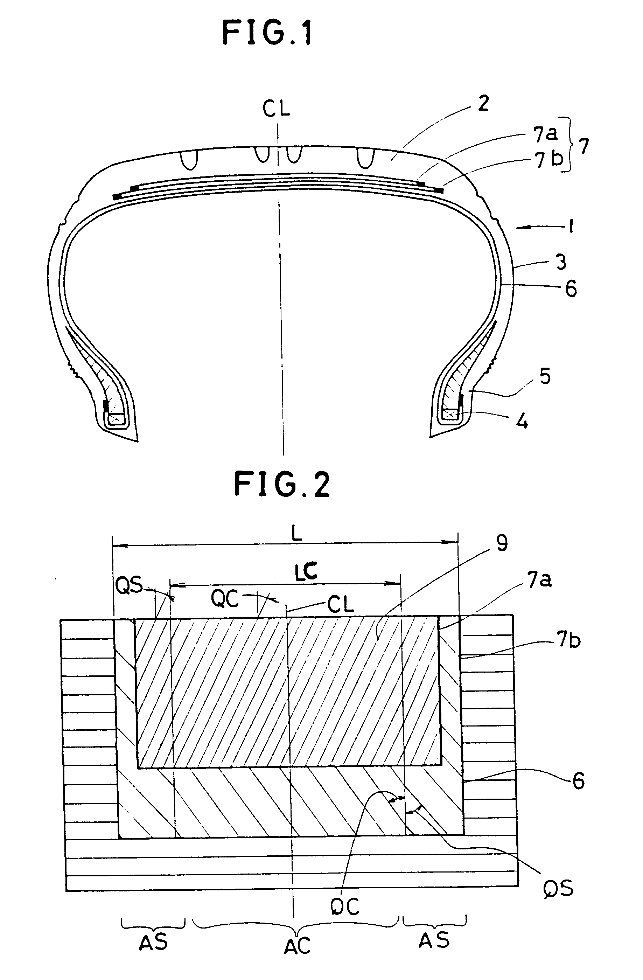

In Figs 1 and 2 a tyre 1 has an annular tread portion 2, sidewall portions 3 extending radially inwardly one from each edge thereof, and bead portions 5 one located at the inner end of each sidewall portion. The bead portions 5 are reinforced by bead cores 4 one disposed in each bead portion 5a. The tyre is reinforced by a carcass 6 turned up in both edge portions around the bead cores 4 from the inside to the outside thereof to be secured thereto and a breaker 7 disposed radially outside the carcass to reinforce the tread region 2.

The carcass 6 comprises a ply of substantially radially arranged cords. For the carcass cords, nylon, polyester, aromatic polyamide, or metal cords, or glass fibre cords can be employed. In this example, the carcass 4 is of only one ply, but in the present invention one, two or more plies may be used.

The breaker 7 comprises two plies of cords, an radially inner ply 7b and an outer ply 7a. The breaker cords are made of metal cords which are inclined with respect to the tyre equatorial plane.

Fig.2 show the cord arrangements of the breaker 7 and the carcass 6.

The breaker 7 can be considered as being divided into a crown portion AC centred on the equatorial plane CL of the tyre and two shoulder portions AS one on each side thereof.

In each of the inner ply 7b and the outer ply 7a, the cord angle QC in the crown portion AC to the tyre equatorial plane CL is larger than the cord angle QS in each shoulder portion AS to the tyre equatorial plane CL. Further the cord angle in the crown portion of the inner ply 7b is the same as the cord angle QC in the crown portion of the outer ply 7a, but the inner ply cords are inclined in the opposite or reverse sense to the outer ply cords.

Similarly, in each shoulder portion AC, the inner ply cords are inclined in the reverse sense to the outer play cords. The cord angle QS of the inner ply 7b, however, may differ from the cord angle QS of the outer ply 7A.

Also, in each of the outer ply 7a and the inner ply 7b, the breaker cords 9 shown in the drawings change direction quite sharply in the respective border regions between the shoulder portions AS and the crown portion AC, but by a smooth bend as may be formed by applying a circular arc.

The breaker cords 9 must extend continuously across portions AC and AS without any break. If there are some breaks, particularly breaks located in the borders between the regions AC and AS, the cut ends of the cords move individually in the time of ground contact which is undesirable from the points of view of durability and steering stability.

The width LC of the crown portion AC is 0.4 to 0.8 times the maximum width L of the breaker 7 measured parallel to the tyre axial direction. If the width LC exceeds 0.8 times the width L, the effect is that the crown portion AS becomes over strengthened. On the other hand, if LC is less than 0.4 times L, the effect is that the shoulder portions AC becomes over strengthened. Thus, if the width LC is out of the range 0.4 to 0.4L it becomes very difficult to satisfy the above mentioned two characteristics at the same time.

The above mentioned breaker cord angles QC and QS are determined from the characteristics shown in Fig.6 and 7 which depend on the tyre size so as to provide improvements in both ride comfort and steering stability in such a manner that the shocks from the road surface during running are absorbed by the crown portion AC with a low perpendicular bending rigidity, and deformation of the breaker during cornering is reduced by the shoulder portions which have a high lateral bending rigidity.

Note that QC is a greater angle than QS and the difference between the angle QC and the angle QS is preferably not less than 2 degrees. If it is less than 2 degrees, the derived effect from each portion of the breaker is not obtained, and it becomes difficult to improve both the above mentioned characteristics. Moreover, it is preferred to maintain the breaker cord angles QC and QS in the range of 15 to 35 degrees throughout all portions of the breaker 7. In general, if the angles are less than 15 degrees, the perpendicular bending rigidity of the breaker 7 is excessively increased so it becomes difficult to improve the ride comfort, and the lateral bending rigidity thereof, that is, the steering stability is decreased. On the other hand, if the angles are made more than 35 degrees, the circumferential tensile rigidity of the breaker is sharply reduced, and accordingly the hoop effect thereof which is fundamental aim of the breaker 7 is also reduced, and which may well produce an evil effect on another characteristic.

Fig.3 shows another embodiment of the present invention, in which the breaker cord angle QC in the crown portion AC is smaller than the breaker cord angle QS in each shoulder portion AS. In this embodiment, contrary to the above mentioned embodiment, the crown portion AC which has a resultant high lateral bending rigidity contributes to the improvement in the steering stability, and the shoulder portions AS which has a low perpendicular bending rigidity improves the ride comfort.

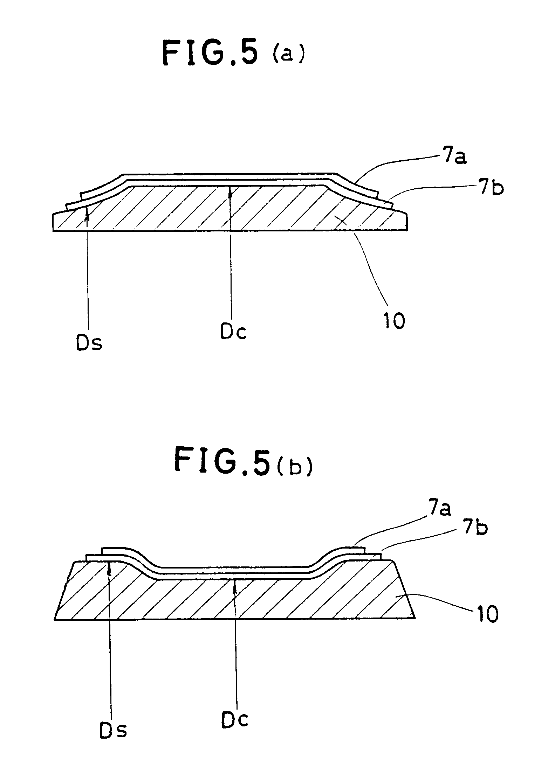

As shown in Fig.5 (a) ( and 5 (b), the above mentioned breakers 7, that is, the breakers in the first and second embodiment may be made by assembling the breaker plies 7A and 7b around the circumference of a breaker forming drum -- the diameter of which changes sharply betwen the centre portion (DC) and both side portions (DS) -- so that each ply has a uniform cord angle applying the breaker plies around the shaped carcass and further applying other components thereon, and then vulcanising it in a vulcanising machine.

Test tyres of 205/60R15 shown in Table 1 were made as working examples of the present invention together with reference tyres by way of trial.

The test tyres each comprised a carcass of polyester cords, a breaker of metal cords, and a pair of bead cores, and have identical specifications except for the breaker cord angles.

The reference tyre 1 was a conventional one in which the breaker cord angles were uniform across the width of the breaker.

The reference tyre 2 was one in which the breaker cord angles were smaller than those of the reference tyre 1.

The reference tyre 3 was one in which the breaker cord angle were larger than those of the reference tyre 1.

The working example tyres 1 and 2 were tyres of the present invention in which the breaker cord angles are changed between the crown portion AC and the shoulder portions AS.

The test tyres of each kind were mounted on an 1800 cc passenger car made in japan, and ran on a given course, to evaluate steering stability and ride comfort through a test driver's feel. The results are indicated in the bottom columns of Table 1, using an index based on the assumption that the evaluations of the reference tyre 1 are 100. (The larger the value is, the better is the characteristic).

**TABLE 1**

| Tire | Ref.1 | Ref.2 | Ref.3 | Ex.1 | Ex.2 |
|---|---|---|---|---|---|
| L (mm) | 168 | 168 | 168 | 168 | 168 |
| QC (deg) | 22 | 19 | 24 | 24 | 19 |
| QS (deg) | 22 | 19 | 24 | 19 | 24 |
| LC (mm) | 168 | 168 | 168 | 116 | 116 |
| Steering stability | 100 | 120 | 85 | 110 | 100 |
| Ride comfort | 100 | 90 | 115 | 105 | 110 |

As compared with the reference tyre 1, reference tyre 2 was higher in lateral bending rigidity of the breaker, whereby the steering stability was improved, but the ride comfort became worse because this tyre was also higher in perpendicular bending rigidity of its breaker. The reference tyre 3 had the opposite tendency.

The working example tyre 1 was improved in both steering stability and ride comfort as compared with the reference tyre 1.

The working example tyre 2 was of the same level as the reference tyre 1 in steering stability, but the ride comfort was improved compared with that of the reference tyre 1.

As described above, in the pneumatic radial tyre of the present invention, by changing the breaker cord angles between the crown and the shoulder portions, the steering stability and the ride comfort can be improved in a well balanced manner.

## Claims

1. A pneumatic radial tyre comprising a carcass (6) of at least one ply of radially arranged cords turned up around bead cores (4) from the inside to the outside thereof, and a breaker (7) disposed radially outside said carcass (6) and comprising at least two adjacent plies (7a,7b) inclined with respect to the equatorial plane (CL) of the tyre so that the cords of one ply (7a) are inclined oppositely to the cords of the other ply (7b), the cords of each of said breaker plies (7a,7b) continuously arranged so that the cord angle QC in a crown portion (AC) to the equatorial plane (CL) differs from the cord angle QS in each shoulder portion (AS) of the breaker to the equatorial plane, said crown portion centred about the tyre equator (CL), said shoulder portions (AS) located one on each side of said crown portion (AC), characterised in that the crown portion has a width of 0.4 to 0.8 times the maximum width of the breaker (7), the cord angle QS in the shoulder portions (AS) is larger than the cord angle QC in the crown portion (AC), the difference between the cord angle QC in the crown portion (AC) and the cord angle QS in the shoulder portions (AS) is not less than 2 degrees, and the cord angles QC and QS are in the range of 15 to 35 degrees.

2. A pneumatic radial tyre according to claim 1 characterised in that said breaker cords are metal cords.

## Patentansprüche

1. Radialluftreifen mit einer Karkasse (6) aus zumindest einer Lage von radial angeordneten Korden, die um Wulstkerne (4) von innen nach außen nach oben umgebogen sind, und einem Verstärkungsgürtel (7), der radial außerhalb der Karkasse (6) angeordnet ist und zumindest zwei benachbarte Lagen (7a, 7b) umfaßt, die hinsichtlich der Äquatorebene (CL) des Reifens geneigt sind, so daß die Korde einer Lage (7a) entgegengesetzt gegenüber den Korden der anderen Lage (7b) geneigt sind, wobei die Korde einer jeden Verstärkungsgürtellage (7a, 7b) kontinuierlich so angeordnet sind, daß sich der Kordwinkel QC in einem Kronenteil (AC) zur Äquatorebene (CL) von dem Kordwinkel QS in jedem Schulterteil (AS) des Verstärkungsgürtels zur Äquatorebene unterscheidet, der Kronenteil um den Reifenäquator (CL) zentriert ist und jeweils ein Schulterteil (AS) auf jeder Seite des Kronenteils (AC) angeordnet ist,
dadurch **gekennzeichnet,**
daß der Kronenteil eine Breite aufweist, die das 0,4- bis 0,8-fache der Maximalbreite des Verstärkungsgürtels (7) beträgt, der Kordwinkel QS in den Schulterteilen (AS) größer ist als der Kordwinkel QC im Kronenteil (AC), der Unterschied zwischen dem Kordwinkel QC im Kronenteil (AC) und dem Kordwinkel QS in den Schulterteilen (AS) nicht geringer als 2° ist und die Kordwinkel QC und QS im Bereich von 15 bis 35° liegen.

2. Radialluftreifen gemäß Anspruch 1,
dadurch **gekennzeichnet,**
daß die Verstärkungsgürtelkorde Metallkorde sind.

## Revendications

1. Pneumatique à carcasse radiale, comprenant une carcasse (6) dont au moins une nappe de câblés disposés radialement est repliée autour de tringles (4) de l'intérieur vers l'extérieur, et une nappe sommet (7) disposée radialement à l'extérieur de la carcasse (6) et comprenant au moins deux nappes adjacentes (7a, 7b) inclinées par rapport au plan équatorial (CL) du pneumatique afin que les câblés d'une nappe (7a) soient inclinés en sens opposé des câblés de l'autre nappe (7b), les câblés de chacune des nappes (7a, 7b) de la nappe sommet étant disposés de façon continue afin que l'angle QC des câblés dans la partie centrale (AC), par rapport au plan équatorial (CL), diffère de l'angle des câblés QS de chacune des parties d'épaulement (AS) de la nappe sommet par rapport au plan équatorial, la partie centrale étant centrée sur l'équateur (CL) du pneumatique et des parties d'épaulement (AS) étant placées de part et d'autre de la partie centrale (AC), caractérisé en ce que la partie centrale a une largeur comprise entre 0,4 et 0,8 fois la largeur maximale de la nappe sommet (7), l'angle QS des câblés dans les parties d'épaulement (AS) est supérieur à l'angle QC des câblés dans la partie centrale (AC), la différence entre l'angle QC des câblés de la partie centrale (AC) et l'angle QS des câblés des parties d'épaulement (AS) n'est pas inférieure à 2°, et les angles QC et QS des câblés sont compris entre 15 et 35°.

2. Pneumatique à carcasse radiale selon la revendication 1, caractérisé en ce que les câblés de la nappe sommet sont des câblés métalliques.
